# EUROPÄISCHE PATENTSCHRIFT

(11) **EP 3 633 168 B1**
(45) Veröffentlichungstag und Bekanntmachung des Hinweises auf die Patenterteilung: **11.01.2023**
(21) Anmeldenummer: 19184483.6
(22) Anmeldetag: 04.07.2019
(51) Int. Cl.: F02D 37/02, F02D 13/06, F02D 41/00, F02P 5/15, F02D 41/14, F01L 1/18, F01L 13/00

(54) **VERFAHREN ZUR KOMPENSATION EINER GASFEDERWIRKUNG BEI ZYLINDERABSCHALTUNG MIT ABGASEINSCHLUSS**
METHOD FOR COMPENSATING A GAS SPRING EFFECT IN EVENT OF CYLINDER DEACTIVATION WITH EXHAUST GAS INCLUSION
PROCÉDÉ DE COMPENSATION D'UN EFFET DE RESSORT À GAZ LORS D'UNE MISE HORS CIRCUIT DE CYLINDRE À INCLUSION DE GAZ D'ÉCHAPPEMENT

(30) Priorität: 14.09.2018 DE 102018215649
(43) Veröffentlichungstag der Anmeldung: 08.04.2020
(73) Patentinhaber: Volkswagen AG, 38440 Wolfsburg (DE)
(72) Erfinder: Thaler, Tim, 30161 Hannover (DE); Gessenhardt, Dr. Christopher, 39356 Weferlingen (DE)

(56) Entgegenhaltungen:
- US-A1- 2015 075 458
- US-A1- 2016 215 705
- US-A1- 2017 342 920

## Beschreibung

Die Erfindung betrifft ein Verfahren zur Steuerung eines Verbrennungsmotors mit mehreren Zylindern, wobei der Verbrennungsmotor einen ersten Betriebszustand, in dem alle Zylinder aktiv sind, und einen zweiten Betriebszustand, in dem einer der mehren Zylinder aktiv ist und einer der mehreren Zylinder deaktiviert ist. Der Motor kann also in einem Teilbetrieb betrieben werden.

Die Erfindung betrifft weiterhin eine entsprechende Motorsteuerung, einen Verbrennungsmotor und ein Fahrzeug.

Zur Einsparung von CO₂-Emissionen können bei Verbrennungsmotoren im Teillastbereich einzelne Zylinder deaktiviert/abgeschaltet werden. Hierfür werden, in den zu deaktivierenden Zylindern, Einlass- und Auslassventile geschlossen und eine Kraftstoffeinspritzung in die Brennräume abgeschaltet, wodurch die betroffenen Zylinder nunmehr keinen Beitrag zu einem von einem Verbrennungsmotor abgegebenen Drehmoment leisten. Diese Zylinderabschaltung soll für einen Fahrer möglichst unbemerkt bleiben, d.h. das von dem Verbrennungsmotor abgegebene Drehmoment muss unmittelbar vor, während sowie nach der Zylinderabschaltung möglichst konstant bleiben. Mit anderen Worten, nach der Zylinderabschaltung müssen die weiterhin aktiven/befeuerten Zylinder mit einer höheren Last betrieben werden, um den Momenten-/Leistungsverlust durch die deaktivierten Zylinder auszugleichen. Daher muss der Übergang von einem Vollmotorbetrieb in einen Teilmotorbetrieb bei der Gestaltung und Auslegung eines Verbrennungsmotors besonders berücksichtigt werden.

Aus der DE 10 2012 002 377 A1 ist es bekannt, Drehmomentschwankungen während einer Zylinderdeaktivierung und -reaktivierung zu verringern, indem ein Zündfünkenzeitpunkt für die Zylinder verstellt wird. Aus der DE 11 2015 001 206 T5 geht hervor, dass eine Verringerung von unerwünschten Geräuschen, unerwünschten Schwingungen und unerwünschter Rauheit (noise, vibration, harshness, kurz: NVH) mittels einer Zylinderabschalt-Motorsteuerung erreichbar ist. DE 10 2004 025 953 A1 offenbart ein Verfahren für einen Verbrennungsmotor mit variablen Zylindern, um einen durch einen Kraftstoffunterbrechungsbetrieb des Verbrennungsmotors verursachten Stoß zu reduzieren. US 2016/215705 A1 offenbart eine Änderung eines Zündwinkels der Zylinder zu einem späteren Zündzeitpunkt vor einer Aktivierung der Zylinderabschaltung.

Bei der Zylinderabschaltung ist durch eine variable Reihenfolge, in der Einlass- und Auslassventile der zu deaktivierenden Zylinder abgeschaltet werden, ein Einschluss eines kompressiblen Mediums im Brennraum eines deaktivierten Zylinders möglich. Demnach ist im Brennraum ein Frischlufteinschluss oder ein Abgaseinschluss realisierbar. Es ist auch möglich, den Brennraum weitgehend zu evakuieren.

Derzeit wird im Zuge der Zylinderabschaltung der Frischlufteinschluss bevorzugt, da sich hierbei keine Nachteile hinsichtlich eines Momentverlaufs, der Triebwerksbelastung und des Ölverbrauchs ergeben. Beim Vakuumeinschluss kann zwischen dem Brennraum und dem Kurbelwellengehäuse ein Druckgefälle entstehen, das einen erhöhten Öleintrag aus dem Kurbelwellengehäuse in den Brennraum verursachen kann. Dies wiederum kann zu einer Verschlechterung von Emissionswerten sowie einer erhöhten Neigung zur irregulären Verbrennung, z.B. Klopfen und Vorentflammung, nach Rückschaltung in einen Vollbetrieb des Verbrennungsmotors führen.

Bei Nutzung des Abgaseinschlusses in dem deaktivierten Zylinder folgt nach einem positiven Momentenbeitrag aus einem letzten Verbrennungstakt des zu deaktivierenden Zylinders wegen einer anschließenden Kompression des heißen eingeschlossenen Abgases ein Abbremsen des Kolbens (im anschließenden Ausstoßtakt), das zu einem Absenken/Einbrechen des abgegebenen Drehmoments des Verbrennungsmotors führen kann. Das im Brennraum eingeschlossene Abgas wirkt demnach als eine Gasfeder, die in diesem Takt gegen den Antrieb wirkt.

Durch bauartbedingte Zwänge, beispielsweise wegen der Mechanik einer zur Ventilsteuerung verwendeten Nockenwelle, kann es erforderlich sein, den vorteilhaften Frischlufteinschluss zugunsten des Abgaseinschlusses aufzugeben.

Somit ist die Aufgabe der vorliegenden Erfindung, ein Verfahren zur Steuerung eines Verbrennungsmotors bereitzustellen, der die oben genannten Nachteile eines Abgaseinschlusses während einer Zylinderabschaltung wenigstens teilweise überwindet.

Diese Aufgabe wird durch ein Verfahren nach Anspruch 1, eine Motorsteuerung nach Anspruch 13, einen Verbrennungsmotor nach Anspruch 14 und ein Fahrzeug nach Anspruch 15 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erster Aspekt der vorliegenden Offenbarung ist ein erfindungsgemäßes Verfahren zur Steuerung eines Verbrennungsmotors mit mehreren Zylindern, wobei der Verbrennungsmotor einen ersten Betriebszustand, in dem alle Zylinder aktiv sind, und einen zweiten Betriebszustand, in dem einer der mehreren Zylinder aktiv und einer der mehreren Zylinder deaktiviert ist, aufweist, umfasst die folgenden Schritte:
- Umschalten des Verbrennungsmotors von dem ersten in den zweiten Betriebszustand, wobei, in dem zu deaktivierenden Zylinder, ein Auslassventil nach einem Verbrennungstakt und ein Einlassventil vor einem den Verbrennungstakt folgenden Ansaugtakt im geschlossenen Zustand deaktiviert werden, so dass so ein aus dem Verbrennungstakt entstehendes Abgas in dem zu deaktivierenden Zylinder eingeschlossen wird; und
- Ändern eines Zündwinkels des zu deaktivierenden Zylinders zu einem früheren Zündzeitpunkt hin zur Verringerung einer Temperatur eines während des Verbrennungstakts entstehenden Abgases.

Mit aktiven Zylindern sind insbesondere solche gemeint, in deren Brennraum thermodynamische Kreisprozesse (z.B. Otto-, Diesel- oder andere geeignete Prozesse) vollständig durchgeführt werden. So ein thermodynamischer Kreisprozess umfasst typischerweise einen Ansaugtakt, einen Verdichtungstakt, einen Verbrennungstakt und einen Ausstoßtakt.

Mit deaktivierten Zylindern sind insbesondere solche gemeint, in deren Brennraum der thermodynamische Kreisprozess nicht durchgeführt und insbesondere kein Verbrennungstakt ausgeführt wird. Dazu kann eine Kraftstoffzufuhr in den Brennraum des deaktivierten Zylinders unterbunden und/oder eine Zündung von Kraftstoff verhindert und/oder eine Betätigung des Einlass- und Auslassventils des deaktivierten Zylinders unterlassen werden, wodurch die Ventile in einem geschlossenen Zustand gehalten werden.

In dem zweiten Betriebszustand kann einer der mehreren Zylinder deaktiviert sein, während die restlichen der mehren Zylindern weiterhin betrieben werden, oder mit anderen Worten, aktiv sind und die über die Kurbelwelle gekoppelten Kolben der deaktivierten Zylinder mitschleppen. Ferner ist ersichtlich, dass wenigstens einer der mehreren Zylinder aktiv und wenigstens einer der mehren Zylinder deaktiviert sein kann. Beispielswiese können bei einem Teilmotorbetrieb eines 4-Zylinder-Motors zwei Zylinder aktiv und zwei Zylinder deaktiviert sein. Weiterhin ist es möglich, dass in Verbrennungsmotoren genau ein Zylinder aktiv und genau ein Zylinder deaktiviert ist.

Erfindungsgemäß wird das Auslassventil des zu deaktivierenden Zylinders nach einem Verbrennungstakt und das Einlassventil des zu deaktivierenden Zylinders vor einem den Verbrennungstakt folgenden Ansaugtakt deaktiviert. Hierbei sind alle Einlassventile und Auslassventile des zu deaktivierenden Zylinders gemeint. Denkbar sind jedoch auch andere Zeitpunkte für eine Deaktivierung des Einlass- und Auslassventils, sofern es zu einem Abgaseinschluss in dem zu deaktivierenden/deaktivierten Zylinder kommt. Mit anderen Worten, beim Umschalten des Verbrennungsmotors von dem ersten in den zweiten Betriebszustand, d.h. beim Deaktivieren von einem der mehreren Zylinder, werden alle Einlass- und Auslassventile des zu deaktivierenden Zylinders derart betätigt, insbesondere deaktiviert bzw. geschlossen, dass es in dem zu deaktivierenden/deaktivierten Zylinder, insbesondere in dessen Brennraum, zu einem Abgaseinschluss kommt.

Ein Abgaseinschluss ist ein Einschluss eines während des Verbrennungstakts (der jeweilig zu deaktivierenden Zylindern) entstehenden Abgases. Das eingeschlossene Abgas entfaltet in dem deaktivierten Zylinder eine Gasfederwirkung.

Ferner werden das Einlass- und das Auslassventil in einem geschlossenen Zustand deaktiviert. In der Regel werden das Einlass- und das Auslassventil während eines Verbrennungstaktes ohnehin in einem geschlossenen Zustand gehalten. Die Deaktivierung kann z.B. erfolgen, indem zur Ventilsteuerung vorgesehene Nockenwellen entsprechend betätigt werden.

Durch ein Ändern/Verstellen des Zündwinkels des zu deaktivierenden Zylinders in Richtung früh (früherer Zündzeitpunkt) ist eine Verringerung einer Temperatur des aus dem Verbrennungstakt entstehenden Abgases und somit eine entsprechende Verringerung einer durch das Abgas bewirkten Gasfederwirkung erreichbar. So ist eine Gasfederwirkung, die durch das in dem deaktivierten Zylinder befindliche eingeschlossene Abgas bewirkt wird, reduzierbar, da die Wirkung/Stärke einer Gasfeder abhängig von einer Temperatur des der Gasfeder bildenden Gases ist. Durch die entsprechende Verstellung des Zündwinkels wird die Temperatur des entstehenden Abgases herabgesetzt, die Gasfederwirkung reduziert und damit auch der verursachte Momenteneinbruch.

Eine Variante des Verfahrens kann ferner ein Abmagern eines Luft-Kraftstoff-Gemischs in dem zu deaktivierenden Zylinder umfassen. Das abgemagerte Luft-Kraftstoff-Gemisch ist in dem zu deaktivierenden Zylinder einzustellen/einzuspritzen, um in einem Verbrennungstakt verbrannt zu werden. Unter Abmagern ist zu verstehen, dass ein Verbrennungsluftverhältnis λ zwischen einer Luftmenge und einer (eingespritzten) Kraftstoffmenge größer als 1 ist. Eine Verbrennung eines abgemagerten Luft-Kraftstoff-Gemischs hat den Effekt, dass ein aus der Verbrennung resultierender Momentenbeitrag kleiner als bei einer Verbrennung mit einem gesättigten Luft-Kraftstoff-Gemisch (λ=1) ist. Hierbei ist unter dem Momentenbeitrag ein aus einem Verbrennungstakt der Zylinder erzeugbares, auf eine Kurbelwelle des Verbrennungsmotors wirkendes Drehmoment gemeint.

Aufgrund des reduzierten Momentenbeitrags durch die Abmagerung ist eine Momentenbeitragserhöhung, die aufgrund der oben beschriebenen Änderung des Zündwinkels zu einem früheren Zündzeitpunkt hin auftritt, kompensierbar. Zusätzlich resultiert aus der Verbrennung des abgemagerten Luft-Kraftstoff-Gemischs ein Abgas, dessen Temperatur niedriger als ein Abgas aus einer Verbrennung eines gesättigten Luft-Kraftstoff-Gemisch ist. Entsprechend entsteht eine geringere Gasfederwirkung, da die Gasfederwirkung mit abnehmender Temperatur ebenfalls abnimmt.

Ferner kann in dem Verfahren ein Erhöhen eines von dem aktiven Zylinder erzeugbaren Momentenbeitrags in Abhängigkeit einer Gasfederwirkung, die durch das in dem deaktivierten Zylinder eingeschlossenen Abgas bewirkt wird, erfolgen. Dadurch ist die Gasfederwirkung in dem deaktivierten Zylinder mittels des aktiven Zylinders zumindest teilweise kompensierbar.

Es gibt Ausführungen, bei denen der erzeugbare Momentenbeitrag des aktiven Zylinders durch Ändern eines Zündwinkels des aktiven Zylinders zu einem früheren Zeitpunkt hin erhöht werden kann. Hierbei ergibt sich der Effekt, dass lediglich eine Steuerung/Änderung des Zündwinkels für eine Anhebung des Momentenbeitrags (Momentenanhebung) sorgt, anstatt ein für eine Verbrennung vorgesehenes Luft-Kraftstoff-Gemisch und/oder eine (Frisch-) Luftzufuhr zu einer Brennkammer des aktiven Zylinders zu ändern/steuern. Mithilfe einer solchen Zündwinkelfrühverstellung (, d.h. Ändern eines Zündwinkels zu einem früheren Zeitpunkt hin) ist eine Momentenanhebung durch die in einem Verbrennungstakt stattfindenden Verbrennung einfach realisierbar.

Ferner kann der frühere Zündzeitpunkt zum Ändern des Zündwinkels des zu deaktivierenden Zylinders entsprechend einem Soll-Moment des Verbrennungsmotors einstellbar sein. Alternativ oder in Ergänzung dazu kann der frühere Zündzeitpunkt zum Ändern des Zündwinkels des aktiven Zylinders ebenfalls entsprechend dem Soll-Moment des Verbrennungsmotors einstellbar sein. Unter dem Soll-Moment des Verbrennungsmotors kann dasjenige Moment zu verstehen sein, das der Verbrennungsmotor zu einem bestimmten Zeitpunkt zur Verfügung stellen soll und über die Betätigung des Gaspedals angefordert wird (Fahrerwunsch).

Es gibt Ausführungen, bei denen das Soll-Moment des Verbrennungsmotors durch folgende Schritte bestimmt wird:
- Erfassen eines Soll-Moments einer Abtriebswelle des Verbrennungsmotors;
- Bestimmen eines aus einer Gasfederwirkung resultierenden Verlustmoments, wobei die Gasfederwirkung durch das in dem deaktivierten Zylinder befindliche Abgas bewirkt wird; und
- Bestimmen eines Soll-Moments des Verbrennungsmotors in Abhängigkeit des Soll-Moments der Abtriebswelle und des aus der Gasfederwirkung resultierenden Verlustmoments.

Dabei kann die Abtriebswelle beispielsweise eine Kurbelwelle sein. Das Soll-Moment der Abtriebswelle kann beispielsweise durch eine Gaspedalstellung erfasst werden. Mit anderen Worten, das Soll-Moment der Abtriebswelle ist das Moment, das verfügbar sein soll, um einen Betriebszustand (z.B. Fahrzeuggeschwindigkeit) zu erreichen, die der Gaspedalstellung entspricht. Dabei muss beachtet werden, dass ein von dem Verbrennungsmotor, insbesondere dessen Zylindern, erzeugtes Moment nicht vollkommen zum Antreiben des Fahrzeugs verwendet wird. In der Regel treten Verlustmomente durch z.B. Bauteilreibung und zusätzliche Verbraucher (beispielsweise Aggregate wie Generator, Klimakompressor) auf, die in die Berechnung des Soll-Moments miteinbezogen werden müssen. Das in dem deaktivierten Zylinder befindliche und dort eingeschlossene Abgas kann eine Gasfeder bilden, deren Wirkung ebenfalls ein Verlustmoment auf das vom Verbrennungsmotor erzeugbare Moment bedeuten kann. Dieses Verlustmoment durch die Gasfederwirkung kann also mit dem Soll-Moment der Abtriebswelle verrechnet werden, um ein von dem Verbrennungsmotor zu erzeugendes Soll-Moment zu bestimmen. Es ist auch möglich, die weiteren oben genannten Verlustmomente durch Bauteilreibung und das Betreiben von weiteren Verbrauchern (Generator, Klimakompressoren) bei der Bestimmung des Soll-Moments des Verbrennungsmotors zu berücksichtigen.

Ferner kann das Bestimmen des aus der Gasfederwirkung resultierenden Verlustmoments beim Komprimieren des Abgases in dem deaktivierten Zylinder erfolgen. Eine Kompression des Abgases (oder anders ausgedrückt, eine Gasfederkompression) erfolgt durch eine Kolbenbewegung des deaktivierten Zylinders hin zum oberen Totpunkt, also während eines Verdichtungs- oder Ausstoßtaktes des deaktivierten Zylinders bei geschlossenen Ventilen. Entsprechend ist es denkbar, diesen Verfahrensschritt an mehreren, aufeinanderfolgenden Zeitpunkten durchzuführen, um den Verdichtungs- und/oder Ausstoßtakts darzustellen/zu erfassen, insbesondere den Zeitraum des Verdichtungs- und/oder Ausstoßtakts.

Dieser Verfahrensschritt hat den Effekt, dass das während der Kompression des Abgases entstehende/bestimmte Verlustmoment durch die Momentenanhebung in einem aktiven Zylinder ausgleichbar ist (z.B. in einem angepassten Verbrennungstakt).

In einer Alternative kann das aus der Gasfederwirkung resultierende Verlustmoment mittels eines empirischen Modells bestimmbar sein. Dabei kann das Verlustmoment der Gasfederwirkung, insbesondere zum Zeitpunkt der Gasfederkompression, an einem Motorprüfstand empirisch ermittelt worden sein. Das derart ermittelte Verlustmoment ist dann in einem über eine Motorlast und eine Motordrehzahl aufgespannten Kennfeld ablegbar.

In anderen Ausführungen kann das Verlustmoment auch aus bekannten Randbedingungen und Betriebszustandsgrößen mittels eines Algorithmus oder eines mathematischen Modells bestimmt werden.

In einer weiteren Alternative kann eine untere Abmagerungsgrenze für das Luft-Kraftstoff-Gemisch in dem zu deaktivieren Zylinder mittels eines empirischen Modells bestimmbar sein. Die untere Abmagerungsgrenze kann ebenfalls an einem Motorprüfstand empirisch ermittelt worden sein und ist in einem über eine Motorlast und eine Motordrehzahl aufgespannten Kennfeld ablegbar. Eine Bestimmung der unteren Abmagerungsgrenze wird durchgeführt, damit während der Zylinderabschaltung keine Verbrennungsaussetzer auftreten.

Ferner kann das Erhöhen des von dem aktiven Zylinder erzeugbaren Momentenbeitrags zu einem Zeitpunkt erfolgen, bei dem die Gasfeder ein Verlustmoment erzeugt, insbesondere zum Zeitpunkt/während der oben beschriebenen Gasfederkompression. Dadurch ist eine Kompensation der Gasfederwirkung, insbesondere des aus der Gasfederwirkung resultierenden Verlustmoments, durch die Momentenanhebung eines aktiven Zylinder kompensierbar. Es ist auch möglich, dass dieses Verlustmoment auch durch die Momentenanhebung von mehreren aktiven Zylinder kompensierbar ist.

In einer Alternative kann die Änderung des Zündwinkels, insbesondere die Zündwinkelfrühverstellung, für den aktiven und/oder den zu deaktivierenden Zylinder/n als ein Offset auf einen aktuellen Zündwinkel des/der aktiven und/oder zu deaktivierenden Zylinder/s in Kennfeldern abgelegt sein. Mit Offset ist ein fester vorbestimmter Wert oder Versatz gemeint, um den der Zündwinkel verstellt wird.

Ferner kann das Verfahren die folgenden Schritte umfassen:
- Erhöhen, vor dem Umschalten des Verbrennungsmotors von dem ersten in den zweiten Betriebszustand, von Luftfüllungen für alle Zylinder des Verbrennungsmotors; und
- Ändern, vor dem Umschalten des Verbrennungsmotors von dem ersten in den zweiten Betriebszustand, von Zündwinkeln für alle Zylinder des Verbrennungsmotors zu einem späteren Zündzeitpunkt hin.

Demnach werden im Vorfeld der Zylinderdeaktivierung, d.h. bevor der Verbrennungsmotor vom ersten in den zweiten Betriebszustand umgeschaltet wird, in allen Zylindern die zugeführte (Frisch-)Luftmenge erhöht. Im Vorfeld der Zylinderdeaktivierung kann auch bedeuten, dass die Erhöhung der (Frisch-) Luftzufuhr und die Zündwinkelwinkelspätverstellung in allen Zylindern zumindest in einem Arbeitsspiel, wenn nicht sogar in mehreren Arbeitsspielen, vor der Zylinderdeaktivierung erfolgt. Insbesondere ist der Zeitpunkt der Zylinderdeaktivierung derjenige, in dem die Einlass- und Auslassventile des zu deaktivierenden Zylinders deaktiviert/abgeschaltet werden, z.B. durch eine entsprechende Betätigung der zur Ventilsteuerung vorgesehenen Nockenwellen.

Die (Frisch-)Luftanhebung in den Zylindern kann beispielsweise durch eine Erhöhung eines Liefergrads von (Frisch-)Luftmenge in den Zylindern erfolgen. Der Liefergrad ist insbesondere durch eine Steuerung der Öffnungszeiten und/oder der Ventilhübe der Einlass- und/oder Auslassventile der Zylinder einstellbar ist.

Alternativ oder in Ergänzung dazu kann die (Frisch-)Luftanhebung durch eine Druckerhöhung, insbesondere in einem Saugrohr, erfolgen. Dazu kann der Verbrennungsmotor einen in einem (Frisch-)Luft-/Gasstrangs des Verbrennungsmotors angeordneten/integrierten Verdichter aufweisen. Insbesondere kann der Verdichter ein Teil eines Abgasturboladers sein, der eine in einem Abgasstrang des Verbrennungsmotors angeordnete/integrierte Turbine aufweist, durch die der Verdichter antreibbar ist. Mit "Saugrohr" ist insbesondere der letzte Abschnitt eines (Frisch-)Luft-/Gasstrangs gemeint, in dem die (Frisch-)Luft-/Gasströmung auf Teilströmungen aufgeteilt wird, die den einzelnen Brennräumen des Verbrennungsmotors zugeführt werden, wobei das Saugrohr eine der Anzahl an Brennräumen entsprechende Anzahl an Gasführungskanälen aufweist.

Die Anhebung der (Frisch-)Luftmenge in den Zylindern hat zur Folge, dass sich ein theoretischer Momentenbeitrag der einzelnen Zylinder erhöht. Um eine tatsächliche Erhöhung des Drehmoments infolge dieser Luftmengenerhöhung zu vermeiden, wird zudem für alle Zylinder der Zündwinkel zu einem späteren Zündzeitpunkt hin (oder anders ausgedrückt "in Richtung spät hin") verstellt/geändert. Diese Schritte erfolgen insbesondere, bevor eine Zylinderabschaltung stattfindet. Diese Verfahrensschritte liefern den Effekt, dass durch die Erhöhung des theoretischen Momentenbeitrags eine Momentenreserve, insbesondere in dem während des zweiten Betriebszustands aktiven Zylinder, vorhanden ist, mit der die Gasfederwirkung, insbesondere das daraus resultierende Verlustmoment, ausgleichbar ist.

Ein zweiter Aspekt der vorliegenden Offenbarung betrifft eine Motorsteuerung für einen Verbrennungsmotor. Die Motorsteuerung ist eingerichtet und ausgebildet, das erfindungsgemäße Verfahren sowie deren oben beschriebenen Ausgestaltungen und Alternativen auszuführen.

Ein dritter Aspekt der vorliegenden Offenbarung ist ein Verbrennungsmotor mit der obigen Motorsteuerung. Der Verbrennungsmotor ist gemäß der oben beschriebenen Verfahren steuerbar.

Ein vierter Aspekt der vorliegenden Offenbarung bezieht sich auf ein Fahrzeug mit einem Verbrennungsmotor, das die oben genannte Motorsteuerung aufweist.

Ausführungsbeispiele der Erfindung werden nun beispielhaft und unter Bezugnahme auf die beigefügten Zeichnungen beschrieben. Dabei zeigt:
- Fig. 1: eine schematische Darstellung eines erfindungsgemäßen Verbrennungsmotors;
- Fig. 2: ein Diagramm der Momentenbeiträge und der Ventilansteuerung der Zylinder des Verbrennungsmotors aus Fig. 1;
- Fig. 3: eine schematische Darstellung eines Verfahrens zur Einberechnung eines aus einer Gasfeder resultierenden Verlustmoments in ein inneres Soll-Moment des Verbrennungsmotors und
- Fig. 4: eine schematische Darstellung eines Verfahrens zur Bestimmung eines Zündwinkels für einen Zylinder des Verbrennungsmotors aus Fig. 1.

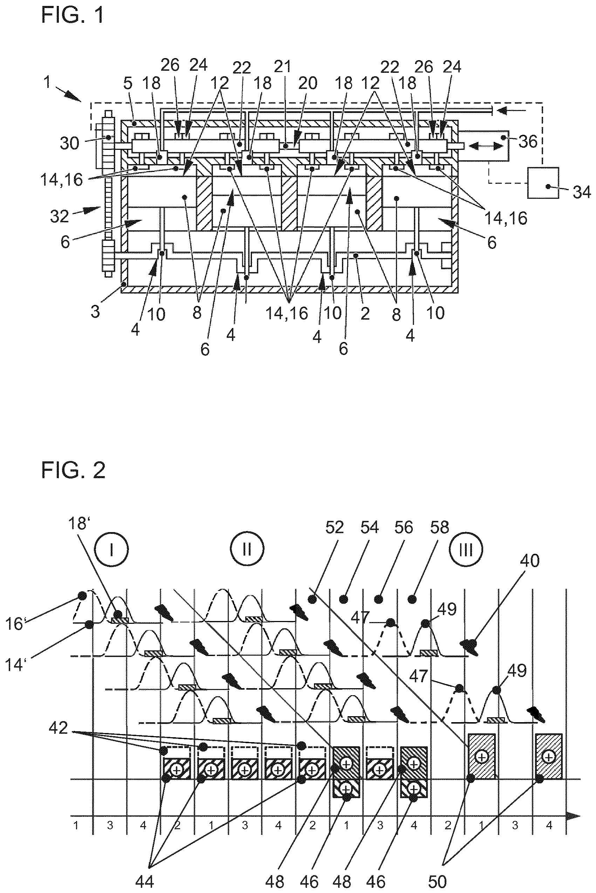

Ein Ausführungsbeispiel eines Verbrennungsmotors 1 ist in Fig. 1 schematisch dargestellt, der insbesondere nach dem Otto-Prinzip betreibbar ist. Der Verbrennungsmotor 1 umfasst ein Kurbelgehäuse 3 und einen Zylinderkopf 5 mit vier Zylinder 6. In der gezeigten Anordnung ist der Verbrennungsmotor 1 zwar als Reihenmotor ausgebildet, jedoch sind auch andere Motoranordnungen, beispielsweise V-Motoren, denkbar. Es gibt auch Motoren mit weniger oder mehr als vier Zylindern 6.

Im Folgenden wird ein Zylinder 6 stellvertretend für alle vier Zylinder 6 genauer beschrieben. Ein Brennraum 12 wird durch den Zylinder 6, einen darin geführten Kolben 8 und den Zylinderkopf 5 begrenzt. Der Kolben 8 ist über eine Pleuelstange 10 mit einer in dem Kurbelgehäuse 3 angeordneten Abtriebswelle in Form einer Kurbelwelle 2 gekoppelt, insbesondere über einen an der Kurbelwelle 2 angeordneten Kurbelzapfen 4.

Der Zylinder 6, insbesondere der Brennraum 12, ist über zwei Einlassventile 14 mit einem (nicht gezeigten) Saugrohr und über zwei Auslassventile 16 mit einem (nicht gezeigten) Abgaskrümmer fluidführend verbunden. In der in Fig. 1 gezeigten Anordnung sind die Auslassventile 16 in einer Blickrichtung senkrecht zur Bildebene hinter den Einlassventilen 14 angeordnet. Es können auch mehr oder weniger als zwei Einlass- bzw. Auslassventile vorhanden sein.

Im Brennraum 12 ist ein thermodynamischer Kreisprozess ausführbar, bei dem im Wesentlichen ein über die Einlassventile 14 zugeführtes Frischgas (Luft) mit einem Kraftstoff zusammen verbrannt wird. Der Kraftstoff kann über eine Einspritzvorrichtung 18 dem Brennraum 12 zugeführt werden. Ein aus der Verbrennung des Luft-Kraftstoff-Gemischs entstehendes Abgas wird über die Auslassventile 16 in den Abgaskrümmer abgeführt.

Der Verbrennungsmotor 1 kann in einem 4-Takt-Verfahren betrieben werden, der aus einem Ansaug-, einem Verdichtungs-, einem Verbrennungs- und einem Ausstoßtakt besteht, der im Folgenden beispielhaft dargestellt wird. Beim Ansaugtakt, also während sich der Kolben 8 von einem oberen Totpunkt (OT) zu einem unteren Totpunkt (UT) der Kolbenbewegung bewegt, sind die Einlassventile 14 geöffnet, damit über die geöffneten Einlassventile 14 Frischgas in den Brennraum 12 einströmt. Dabei kann der sich nach unten (also in Richtung der Kurbelwelle 2) bewegende Kolben 8 das Frischgas ansaugen. Während des Ansaugtakts können die Auslassventile 16 für einen bestimmten Zeitraum, beispielsweise 5° bis 20° Kurbelwellengrad (KW), gleichzeitig mit den Einlassventilen 14 geöffnet sein. Für den auf den Ansaugtakt folgenden Verdichtungstakt, während sich der Kolben 8 von dem UT zu dem OT bewegt, werden die Einlassventile 14 kurz nach dem UT, beispielsweise 40° bis 60° KW, geschlossen und die Auslassventile 16 werden weiterhin im geschlossenen Zustand gehalten. Kurz vor einem oder beim Erreichen des OT, beispielsweise 0° bis 40° KW, beginnt der Verbrennungstakt mit einer Zündung und ein in dem Brennraum 12 eingeschlossenes Gasgemisch wird verbrannt, während sowohl die Einlassventile 14 als auch die Auslassventile 16 geschlossen gehalten werden. Der Verbrennungstakt dauert bis kurz vor dem UT, beispielsweise 45° bis 60° KW, an, wobei an dessen Ende die Auslassventile 16 geöffnet werden, so dass der Ausstoßtakt beginnt und sich der Kolben 8 von dem UT zu dem OT bewegt und dadurch das durch die Verbrennung entstandene Abgas über die geöffneten Auslassventile 16 aus dem Brennraum 12 ausschiebt. Der Ausstoßtakt endet mit einem Schließen der Auslassventile 16 kurz nach dem OT, beispielsweise 5° bis 20° KW. Der nächste Ansaugtakt startet mit einem Öffnen der Einlassventile kurz vor dem OT, beispielsweise 10° bis 15° KW, so dass die Einlass- und Auslassventile 14, 16 für einen kurzen Zeitraum gleichzeitig geöffnet sind.

Das oben beschriebene 4-Takt-Verfahren ist ein Beispiel, und es sind Variationen bzgl. des Zündzeitpunkts und/oder der Öffnungs- und/oder Schließzeitpunkte der Ventile 14, 16 (Ventilsteuerzeiten) möglich.

Eine Betätigung der Einlass- und Auslassventile 14, 16 für das oben beschriebene 4-Takt-Verfahren wird mittels zwei in dem Zylinderkopf 5 angeordneten Nockenwellen 20 realisiert. In der Fig. 1 ist lediglich die Nockenwelle 20 für die Einlassventile 14 sichtbar. Die die Auslassventile 16 betätigende Nockenwelle 20 (Auslassnockenwelle) ist in einer Blickrichtung senkrecht zur Bildebene hinter der die Einlassventile 14 betätigenden Nockenwelle 20 (Einlassnockenwelle) angeordnet. Die Nockenwellen 20 sind in der gezeigten Anordnung zwar oberhalb der Zylinder 6 angeordnet, jedoch sind in Alternativen auch andere Nockenwellenanordnungen denkbar, wie z.B. untenliegende (im Kurbelgehäuse 3 angeordnete) Nockenwellen. In der in Fig. 1 gezeigten Anordnung werden die Nockenwellen 20, insbesondere daran angeordnete Riemenräder 30, über ein Übertragungselement 32, beispielsweise eine Kette oder ein Zahnriemen, von der Kurbelwelle 2 angetrieben.

Die Nockenwellen 20 weisen jeweils zwei Nockenträger 22 auf, die jeweils vier Nockenpaare bestehend aus ersten Nocken 24 und zweiten Nocken 26 aufweisen. Die Nocken 24, 26 dienen zur Betätigung der Einlass- und Auslassventile 14, 16. Über eine Steuervorrichtung 34 ist eine Umschaltvorrichtung 36 steuerbar, mit der die Einlass- und die Auslassventile 14, 16 von einer Betätigung durch die ersten Nocken 24 zu einer Betätigung durch die zweiten Nocken 26 umgeschaltet werden können. Über die zwei Nockenträger 22 können jeweils zwei nebeneinanderliegende Zylinder 6, insbesondere deren Einlass- und Auslassventile 14, 16, betrieben werden.

Die Nockenträger 22 sind hülsenförmig ausgebildet und drehfest auf einer Grundwelle 21 der Nockenwelle 22 angeordnet. Die Einlass- und Auslassnockenwelle 20 weisen jeweils eine Grundwelle 21 auf. Die Funktion der Umschaltvorrichtung 36 beruht auf einer längsaxialen Verschiebbarkeit der hülsenförmigen Nockenträger 22. Entsprechend einer von der Umschaltvorrichtung 36 eingestellten längsaxialen Verschiebestellung der Nockenträger 22 können die Nocken 24, 26 alternativ mit den dazugehörigen Einlass- und Auslassventilen 14, 16 zusammenwirken. Dadurch können die Einlass- und Auslassventile 14, 16 aktiviert bzw. deaktiviert werden.

Eine genaue Ausführung des Umschaltmechanismus sowie einer Ausgestaltung der Nockenwellen 20 ist aus dem Dokument DE 10 2016 209 957 A1 entnehmbar.

Der Verbrennungsmotor 1 ist in einem ersten Betriebszustand, in dem alle Zylinder 6 aktiv sind, und einen zweiten Betriebszustand, in dem zumindest ein Zylinder 6 aktiv und zumindest ein Zylinder 6 deaktiviert ist, betrieben werden. Anders ausgedrückt, der Verbrennungsmotor 1 ist in einem Vollbetrieb und einem Teilbetrieb betreibbar. In der in Fig. 1 gezeigten Anordnung sind die zwei mittigen Zylinder 6 deaktivierbar. Eine derartige Zylinderabschaltung wird erreicht, indem Kraftstoffzufuhr durch die Einspritzvorrichtung 18 sowie eine Betätigung der Einlass- und der Auslassventile 14, 16 mittels der oben beschrieben Umschaltung der Nockenwellen 20 unterbunden wird. Die Einlass- und Auslassventile 14, 16 werden also während der Zylinderabschaltung nicht mehr geöffnet.

Fig. 2 zeigt ein Diagramm, in denen Momentenbeiträge der vier Zylinder 6 des Verbrennungsmotors 1 dargestellt werden. Das Diagramm ist in drei Bereiche unterteilt, wobei diese einen Vollmotorbetrieb I ("erster Betriebszustand"), einen Übergangsbereich II zur Vorbereitung auf einen Halbmotorbetrieb, und den Halbmotorbetrieb III ("zweiter Betriebszustand") des Verbrennungsmotors 1 angeben. Diese Bereiche werden in Fig.2 durch schräge Linien voneinander abgegrenzt. In einer horizontalen Achse ist eine Reihenfolge angegeben, in der die einzelnen Zylinder 6 des Verbrennungsmotors 1 gezündet werden, also eine Zündfolge. Hierbei ist der erste Zylinder 6 derjenige, der einer Kraftabgabeseite oder Kupplung des Verbrennungsmotors 1 gegenüber angeordnet ist. Für andere Motoren-/Zylinderanordnungen wird auf die gängige Norm DIN 73021 für eine Zählrichtung von Zylindern verwiesen. Das hier gezeigte Diagramm bezieht sich auf den in Fig. 1 gezeigten Verbrennungsmotor 1, aber ist auch beispielhaft für andere Verbrennungsmotoren zu verstehen, deren Zylinderanzahl, -anordnung und Zündfolge verschieden von dem in Fig. 1 gezeigten Verbrennungsmotor 1 sind.

Das in Fig. 2 gezeigte Diagramm gibt ferner Ventilverläufe 14', 16', insbesondere Ventilöffnungsverläufe, für die Einlass- und Auslassventile 14, 16, Kraftstoffeinspritzvorgänge 18' und Zündungen 40 für die entsprechenden Zylinder 6 an. Hierbei sind die Ventilverläufe 14', 16' denjenigen Zylinder 6 zuzuordnen, in denen die Zündungen 40 stattfindet, zu welchen die entsprechenden Ventilverläufe 14', 16' hinführen. Beispielsweise führen die oben gezeigten Ventilverläufe 14', 16' zu einer Zündung 40 hin, die in dem zweiten Zylinder 6 stattfindet, und entsprechend stellen die im Diagramm oben gezeigten Ventilverläufe 14', 16' die Einlass- und Auslassventile 14, 16 des zweiten Zylinders 6 dar. Aus den Einlassventilverläufen 14' und den Auslassventilverläufen 16' lässt sich sowohl eine Ventilöffnungsdauer als auch ein Ventilhub (Amplitude der Ventilverläufe 14', 16') ablesen.

Um eine momentenneutrale, also ruckfreie, Umschaltung von dem Vollmotorbetrieb I in den Halbmotorbetrieb III zu ermöglichen, wird zur Vorbereitung für eine Zylinderabschaltung eine Frischluftfüllung in allen Zylindern 6 erhöht, wobei durch die Frischluftanhebung der Zylinder 6 ein höherer theoretischer Momentenbeitrag 42 erzeugbar ist. Deswegen wird zudem in allen Zylindern 6 ein Zündwinkel zu einem späteren Zündzeitpunkt hin geändert/verstellt, um den erhöhten potentiellen Momentenbeitrag 42 auszugleichen und einen jeweils von den Zylindern 6 tatsächlichen erzeugten Momentenbeitrag 44 auf ein ursprüngliches Maß zu regeln, das vor der Frischluftanhebung von den Zylindern 6 erzeugt wurde.

Mit anderen Worten, die Momentenbeiträge 42, 44 ergeben sich aus den Zündungen 40 und den entsprechenden daraus folgenden Verbrennungen in den Brennräumen 12. Die gestrichelt dargestellten Momentenbeiträge 42 sind theoretisch mögliche Beiträge, wohingegen die Momentenbeiträge 44 die tatsächlich erreichten sind. Der in dem Bereich des Vollmotorbetriebs I vorhandene Unterschied zwischen dem theoretischen und dem tatsächlichen Momentenbeitrag 42, 44 tritt aufgrund einer Zündwinkelspätverstellung ein, d.h. die Zündung, insbesondere der Zündwinkel, zum Starten eines Verbrennungstakts wird in Richtung spät verstellt. Dadurch wird der theoretische Momentenbeitrag 42, der durch das in dem Brennraum 12 befindliche Gasgemisch, insbesondere ein Luft-Kraftstoff-Gemisch, möglich ist, nicht optimal ausgenutzt. Im Bereich I wird von keinem Zylinder 6 der theoretisch mögliche Momentenbeitrag 42 erreicht, da alle Zylinder 6 mit der Zündwinkelspätverstellung betrieben werden.

In dem Übergangsbereich II ist ersichtlich, dass ein negativer Momentenbeitrag 46 dem von dem ersten Zylinder 6 erzeugten Momentenbeitrag 48 überlagert ist. Der negative Momentenbeitrag 46 resultiert durch eine Kompression eines Abgases, das aus dem Verbrennungstakt des zweiten Zylinders 6 entstanden und seitdem in dem zweiten Zylinder 6 eingeschlossen ist.

Das Zustandekommen des Abgaseinschlusses in dem zweiten Zylinder 6 wird im Folgenden beschrieben. Wie aus dem in Fig. 2 gezeigten Diagramm ersichtlich, wird der zweite Zylinder 6 abgeschaltet, indem zu einem Zeitpunkt (oder Zeitraum) 52 die Auslassnockenwelle 20, insbesondere die für die ersten und zweiten Zylinder 6 entsprechenden Nockenträger 22, durch die Umschaltvorrichtung 36 derart betätigt/längsaxial verschoben wird, dass die Auslassventile 16 des zweiten Zylinders 6 deaktiviert werden. Zur Deaktivierung der Auslassventile 16 werden diese nun nicht mehr durch die ersten Nocken 24, sondern durch die als Nullnocken ausgebildete zweiten Nocken 26 betätigt. Durch die Nullnockenausbildung werden die Auslassventile 14 des zweiten Zylinders 6 in einem geschlossenen Zustand gehalten, unabhängig von einem Drehwinkel der Auslassnockenwelle 20. Zur Abschaltung des zweiten Zylinders 6 werden zudem dessen Einlassventile 14 deaktiviert. Dieser Vorgang geschieht analog wie vorher beschrieben für die Auslassventile 16 zum Zeitpunkt (oder Zeitraum) 54, wobei die Einlassnockenwelle 20, insbesondere dessen Nockenträger 22, umgeschaltet wird. Durch die Deaktivierung des zweiten Zylinders 6, indem dessen Auslassventile 16 nach erfolgter Verbrennung und vor einem Ausstoßen des aus der Verbrennung entstanden Abgases aus dem Brennraum 12 und dessen Einlassventile 14 vor einem anschließenden Ansaugen deaktiviert werden, kommt es zu dem oben erwähnten Abgaseinschluss in dem zweiten Zylinder 6.

Aus der Fig. 2 ist ersichtlich, dass eine von dem zu deaktivierenden zweiten Zylinder 6 abgegebene Arbeit, also der positive Momentenbeitrag 42 zum Zeitpunkt 52, in einem folgenden Ausstoßtakt des zweiten Zylinders 6, wieder zumindest teilweise durch eine Kompression des in dem zweiten Zylinder 6 eingeschlossenen Abgases zum Zeitpunkt 54 aufgenommen wird. Mit anderen Worten, das eingeschlossene Abgas wirkt als eine Gasfeder, zu deren Kompression Arbeit aufgewendet werden muss. Zu der Kompression kommt es, da der Kolben 8 des zu deaktivierenden/deaktivierten zweiten Zylinders 6 durch seine Verbindung zu der Kurbelwelle 2 weiterhin mitbewegt wird/mitläuft und somit sich wieder zum OT hinbewegt, wodurch sich der Brennraum 12 verkleinert und das Abgas komprimiert wird. Allerdings wirkt sich die Kompression der Gasfeder, da sie gegen die Bewegung des Kolbens 8 zum OT arbeitet, negativ auf ein Drehmoment der Kurbelwelle 2 aus. Insbesondere überlagert sich der aus der Gasfederkompression resultierende negative Momentenbeitrag 46 des zweiten Zylinders 6 mit einem aus der Verbrennung resultierenden Momentenbeitrag 48 des ersten Zylinders 6 zum Zeitpunkt 54.

Da zum Zeitpunkt der Deaktivierung des zweiten Zylinders 6 alle Zylinder 6 mit einer Zündwinkelspätverstellung betrieben werden, ist der negative Momentenbeitrag 46 des zweiten Zylinders 6 zumindest teilweise ausgleichbar, da im Bereich I der theoretische Momentenbeitrag nicht voll ausgeschöpft wurde.

Dafür wird in Fig. 2 zu einem Zeitpunkt (oder Zeitraum) der Gasfederkompression, ein Zündwinkel des ersten Zylinders 6 in Richtung früh gestellt, wodurch ein zusätzlicher Momentenbeitrag erzeugt wird, der den aus der Gasfederkompression resultierenden negativen Momentenbeitrag 46 ausgleicht. Somit gleicht ein von dem ersten Zylinder 6 erzeugter Momentenbeitrag 48 zumindest teilweise den negativen Momentenbeitrag 46 des zweiten Zylinders 6, insbesondere der Gasfederkompression, aus.

Die oben beschriebene Deaktivierung des zweiten Zylinders 6 gilt analog auch für den dritten Zylinder 6, wobei die Auslassventile 16 und die Einlassventile 14 des dritten Zylinders 6 zu einem Zeitpunkt (oder Zeitraum) 56 bzw. 58 deaktiviert werden. Daher bildet sich auch im dritten Zylinder 6 eine Gasfeder und ein entsprechender negativer Momentenbeitrag zum Zeitpunkt 58, die durch einen erhöhten Momentenbeitrag durch den vierten Zylinder 6 zumindest teilweise ausgleichbar ist. Der erhöhte Momentbeitrag des vierten Zylinders 6 ist in gleicher Weise, wie mit Bezug zu dem ersten Zylinder 6 beschrieben, erreichbar.

Im Bereich des Halbmotorbetriebs III sind die zweiten und dritten Zylinder 6 abgeschaltet. Ein Einfluss der Gasfeder in den zweiten und dritten Zylindern 6 ist nicht mehr dargestellt, kann aber noch vorhanden sein. Der Einfluss der Gasfeder nimmt mit zunehmender Anzahl an durchlaufenen Arbeitsspielen durch Blow-by-Effekte (Diffusion der in den Brennräumen 12 eingeschlossenen (Ab-)Gase in das Kurbelgehäuse 3 über (nicht gezeigte) Kolbenringe des Kolbens 8) und/oder durch Wandwärmeverluste (Abgabe der (Ab-)Gaswärme an eine Zylinderwandung) ab. Daher wird beispielhaft der Einfluss der Gasfedern in dem Bereich III nicht mehr dargestellt.

Ferner ist aus Fig. 2 erkennbar, dass die verbliebenen aktiven (ersten und vierten) Zylinder 6 derart betrieben werden, dass sie jeweils einen erhöhten Momentenbeitrag 50 erzeugen. Die Momentenbeiträge 50 sind größer als die theoretischen Momentenbeiträge 42 aufgrund eines erhöhten Liefergrads an Frischluft in den Zylindern 6, der infolge von veränderten Einlassventilverläufen 49 erfolgt. So ist eine Amplitude der Einlassventilverläufe 49 größer als die der Einlassventilverläufe 14', was für einen größeren Einlassventilhub der Einlassventile 14 im Halbmotorbetrieb III steht. Entsprechend der Nullnockausbildung der zweiten Nocken 26 für die Deaktivierung der Einlass- und Auslassventile 14, 16 des zweiten und dritten Zylinders 6 sind die für den ersten und vierten Zylinder 6 entsprechenden zweiten Nocken 26 derart ausgebildet, dass die Einlassventile 14 und Auslassventile 16 des ersten und vierten Zylinders 6 betätigbar sind. Insbesondere werden die Einlass- und Auslassventile 14, 16 durch die zweiten Nocken 26 mit geänderten Einlassventilverläufen 49 und Auslassventilverläufen 47 betätigt/betrieben.

Alternativ oder in Ergänzung zu der Liefergraderhöhung in den Zylindern 6 kann die (Frisch-) Luftmenge in den Zylindern 6 auch durch eine Druckerhöhung in dem Saugrohr des Verbrennungsmotors 1 erfolgen.

Durch die Momentenbeiträge 50 erzeugen die verbliebenen aktiven Zylinder 6 ein gleiches Drehmoment für die Kurbelwelle 2 im Halbmotorbetrieb III wie zuvor alle Zylinder 6 im Vollmotorbetrieb I. Es findet also eine momentenneutrale Umschaltung von dem ersten Betriebszustand I (Vollmotorbetrieb) in den zweiten Betriebszustand III (Halbmotorbetrieb) statt.

Insbesondere ist für die momentenneutrale Umschaltung eine Kompensation der im Übergangsbereich II auftretenden Gasfederwirkung, insbesondere durch die oben erwähnte Gasfederkompression, und der damit einhergehenden negativen Momentenbeiträge 46 erforderlich.

Wie oben beschrieben kann durch eine Zündwinkelfrühverstellung der weiter zu betreibenden Zylinder 6 zumindest teilweise, vorzugsweise vollständig, die aus den Gasfederkompressionen resultierenden negativen Momentenbeiträge 46 ausgeglichen werden. Insbesondere mit Kenntnis über die Höhe der negativen Momentenbeiträge 46 ist deren Kompensation durch Zündwinkelfrühverstellung besonders gut durchführbar. Die Gasfederwirkung ist u.a. abhängig von einer im Brennraum 12 befindlichen Frischgasmenge, insbesondere Luftmenge, und einer Temperatur eines Gases, insbesondere des aus der Verbrennung entstandenen und die Gasfeder bildenden Abgases. Die Abgastemperatur ist wiederum von einem Zündwinkel abhängig. Die Gasfederwirkung lässt sich daher in Abhängigkeit von der in dem Brennraum 12 vorhandenen Luftmenge (bzw. Luft-Kraftstoff-Gemisch) und dem Zündwinkel modellieren.

Ferner ist die Gasfederwirkung nicht nur bestimmbar, sondern lässt sich auch beeinflussen. Wie oben beschrieben ist die Gasfederwirkung abhängig von der Temperatur des der Gasfeder bildenden Abgases. Da zum Zeitpunkt der Zylinderdeaktivierung alle Zylinder 6 mit der Zündwinkelspätverstellung betrieben werden, findet eine geringere Umsetzung von thermischer Energie in mechanische Arbeit (Momentenbeitrag) statt, wodurch die Abgastemperatur im Brennraum (Brennraumtemperatur) im Vergleich zu einem früheren Zündwinkel höher ist. Eine Verstärkung der Gasfederwirkung ergibt sich demnach durch eine Momentenreserve, d.h. den Unterschied zwischen dem theoretisch erreichbaren Momentenbeitrag 42 und dem tatsächlich erreichten Momentenbeitrag 44, die sich durch die Zündwinkelspätverstellung ergibt. Daher kann zur Verringerung der Abgastemperatur der Zündwinkel der zu deaktivierenden/deaktivierten zweiten und dritten Zylinder 6 im Übergangsbereich II (im Arbeitsspiel der Zylinderdeaktivierung) in Richtung früh verstellt werden. In diesem Fall geht die Zündwinkelfrühverstellung mit einer Erhöhung des Momentenbeitrags einher, die wiederum durch eine Abmagerung des Luft-Kraftstoff-Gemisches, das in dem zweiten und dem dritten Zylinder 6 zum Zeitpunkt 52 bzw. Zeitpunkt 56 verbrennt wird. Mit anderen Worten, im Arbeitsspiel der Zylinderdeaktivierung werden die zu deaktivierenden (zweiten und dritten) Zylinder 6 mit einem abgemagerten Luft-Kraftstoff-Gemisch betrieben. Die Verringerung der Abgastemperatur, und somit der Gasfederwirkung, ist also durch eine Zündwinkelfrühverstellung sowie einer Gemischabmagerung in den zu deaktivierenden Zylinder 6 realisierbar.

Hinsichtlich dem abgemagerten Luft-Kraftstoff-Gemisch ist zu beachten, dass eine Brenngrenze des Verbrennungsmotors 1 beachtet werden muss, damit während der Zylinderdeaktivierung keine Verbrennungsaussetzer auftreten. Demgemäß ist auch die Zündwinkelfrühverstellung für die zu deaktivierenden Zylinder 6 in Abhängigkeit einer sog. Magerlaufgrenze des Verbrennungsmotors 1 zu verstellen. Mit anderen Worten, ein Maß für eine Frühverstellung des Zündwinkels der zu deaktivierenden Zylindern 6 ist durch die Magerlaufgrenze des Verbrennungsmotors 1 vorgegeben.

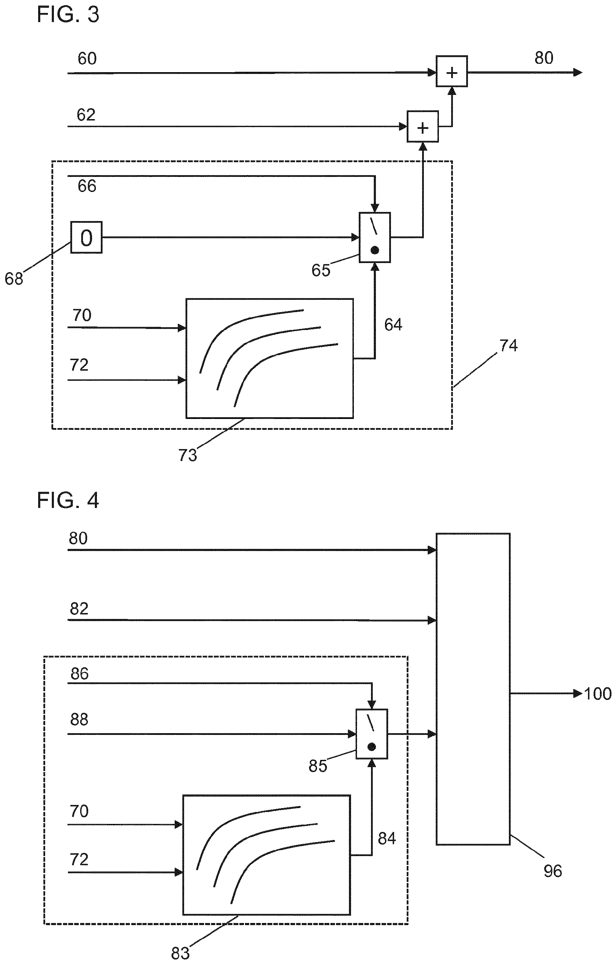

Fig. 3 zeigt schematisch ein Verfahren zur Einberechnung der durch die Gasfederwirkung resultierenden negativen Momentenbeiträge 46 in ein inneres Soll-Moment 80 des Verbrennungsmotors 1. Das Soll-Moment 80 ist das Moment, das durch Momentenbeiträge aller Zylinder 6 erzeugt werden soll. Im Idealfall entspricht ein Soll-Moment 60 der Kurbelwelle 2, das z.B. durch eine Gaspedalstellung erfasst werden kann, dem inneren Soll-Moment 80 des Verbrennungsmotors 1. Unter realen Bedingungen kommen jedoch noch Verlustmomente 62 hinzu, die u.a. durch Bauteilreibung (beispielsweise zwischen dem Kolben 8 und der Zylinderwandung) auftreten können. Ferner ist denkbar, dass ein vom Verbrennungsmotor 1 erzeugtes Drehmoment auch teilweise zum Betreiben für weitere Fahrzeugaggregate wie Generatoren oder Klimakompressoren verwendet wird, die auch Verlustmomente 62 darstellen.

Entsprechend müssen die Verlustmomente 62 zum Erreichen eines Soll-Moments 60 der Kurbelwelle 2 mit in das innere Soll-Moment 80 des Verbrennungsmotors 1 einberechnet werden. Anders ausgedrückt, zur Bestimmung des inneren Soll-Moments 80 werden das Soll-Moment 60 der Kurbelwelle 2 und die Verlustmomente 62 miteinander summiert (wobei hier ein Betrag der Verlustmomente 62 verwendet wird).

Jedoch kann wegen der oben beschriebenen Zylinderabschaltung der zweiten und dritten Zylinder 6 noch ein Verlustmoment 64, das dem negativen Momentbeitrag 46 entspricht, durch die Gasfederkompression auftreten, das ebenfalls bei der Bestimmung des inneren Soll-Moments 80 miteinzuberechnen ist. Allerdings ist dieses Verlustmoment 64 nur zum Zeitpunkt (oder Zeitraum) der Gasfederkompression bzw. während der Gasfederkompression miteinzubeziehen. Entsprechend ist in dem in Fig. 3 gezeigten Verfahren ein Modell 74 der Gasfeder dargestellt, das mithilfe eines Umschaltblock 65 das Verlustmoment 64 erst miteinberechnet, wenn es zur Gasfederkompression kommt bzw. während die Gasfederkompression erfolgt. Mit anderen Worten, das Verlustmoment 64 wird nur zum Zeitpunkt der Gasfederkompression bzw. während der Gasfederkompression in das innere Soll-Moment 80 miteinberechnet.

In dem Modell 74 der Gasfeder stellt Pfeil 66 den Zeitpunkt (Zeitraum) der Gasfederkompression und Block 68 alle anderen Zeitpunkte, zu denen keine Gasfederkompression stattfindet, dar. Ferner umfasst das Modell 74 ein empirisches Modell 73 des Verlustmoments 64 durch die Gasfeder. Hierzu wird das Verlustmoment 64 empirisch am Motorprüfstand ermittelt und in einem über eine Motorlast 70 und eine Motordrehzahl 72 aufgespannten Kennfeld abgelegt.

Während der Block 68 aktiv ist, also keine Gasfederkompression stattfindet, wird an den Umschaltbock 65 weitergegeben, dass aus dem Modell 74 der Gasfeder kein Verlustmoment hervorgeht, das zur Bestimmung des inneren Soll-Moments 80 miteinbezogen werden muss. Sobald es zu einer Gasfederkompression kommt, wird der Pfeil 66 aktiv und gibt an den Umschaltblock 65 weiter, dass ein Verlustmoment 64 entsteht, so dass aus dem Modell 74 das Verlustmoment 64 hervorgeht und mit den weiteren Verlustmomenten 62 und dem Soll-Moment 60 der Kurbelwelle 2 zur Bestimmung des inneren Soll-Moments 80 des Verbrennungsmotors verrechnet, insbesondere aufsummiert, wird (, wobei auch hier ein Betrag des Verlustmoments 64 verwendet wird).

Das innere Soll-Moment 80 wird in dem in Fig. 4 schematisch gezeigten Verfahren zur Bestimmung eines Zündwinkels 100 für einen der Zylinder 6 des Verbrennungsmotors 1. In dem Schema ist ein Momentenmodell 96 zur Bestimmung eines Ist-Moments des Verbrennungsmotors 1 dargestellt. Die Eingangsgrößen des Momentenmodells 96 sind das innere Soll-Moment 80 des Verbrennungsmotors 1, eine dem Brennraum 12 (des betrachteten Zylinders 6) zugeführte Luftmenge 82 sowie ein aus einem Modell 94 hervorgehendes Luft-Kraftstoff-Gemisch 84. Als Ausgangsgröße aus dem Momentenmodell 96 kommt dann ein Zündwinkel 100 für den betrachteten Zylinder 6 hervor, der zur Erreichung des inneren Soll-Moments 80 erforderlich ist.

Das Modell 94 funktioniert ähnlich zu dem Modell 76 der Gasfeder. In dem Modell 94 stellt Pfeil 86 einen Zeitpunkt einer Kraftstoffeinspritzung in den zu deaktivierenden Zylinder 6 und Pfeil 88 ein Luft-Kraftstoff-Gemisch aus einem Normalbetrieb des Verbrennungsmotors 1, dar. Ferner umfasst das Modell 94 ein empirisches Modell 83 zur Bestimmung des Luft-Kraftstoff-Gemisches 84 mit einer maximal möglichen unteren Abmagerungsgrenze. Das maximal abgemagerte Luft-Kraftstoff-Gemisch wird in einem zu deaktivierenden Zylinder 6 in dem unmittelbar vor der Zylinderabschaltung ausgeführten Verbrennungstakt verbrannt. Hierzu wird das wird die untere Abmagerungsgrenze empirisch am Motorprüfstand ermittelt und in einem über die Motorlast 70 und die Motordrehzahl 72 aufgespannten Kennfeld abgelegt.

Ferner umfasst das Modell 94 einen Umschaltblock 85. Solange keine Kraftstoffeinspritzung in den zu deaktivierenden Zylinder 6, insbesondere zu den Zeitpunkten 52, 58, erfolgt, wird das durch den Pfeil 88 vorgegebene Luft-Kraftstoff-Gemisch aus dem Normalbetrieb über den Umschaltblock 85 an das Momentenmodell 96 weitergegeben. Sobald es zu einer Zylinderabschaltung kommen soll, wird der über den Pfeil 86 dargestellte Zeitpunkt der Krafteinspritzung an den Umschaltblock 85 weitergeben. Entsprechend wird, anstatt des durch den Pfeil 88 dargestellten Luft-Kraftstoff-Gemisches aus dem Normalbetrieb, das durch das empirische Modell 83 ermittelte abgemagerte Luft-Kraftstoff-Gemisch 84 zur Minderung der Gasfederwirkung in den Brennraum 12 des zu deaktivierenden Zylinders 6 eingespritzt.

Das abgemagerte Luft-Kraftstoff-Gemisch 84 wird an das Momentenmodell 96 weitergegeben. Aufgrund des abgemagerten Luft-Kraftstoff-Gemischs 84 verringert sich auch der von dem betroffenen Zylinder 6 erzeugbarer Momentenbeitrag. In dem Momentenmodell 96 wird ein Wirkungsgrad des abgemagerten Luft-Kraftstoff-Gemischs 84 berechnet, wodurch der verringerte Momentenbeitrag berechenbar ist. Das Momentenmodell 96 gibt einen entsprechenden Zündwinkel 100 an betrachteten Zylinder 6 aus, der den verringerten Momentenbeitrag ausgleicht, insbesondere zur Erreichung des inneren Soll-Moments 80.

Die in den Fig. 2 und 3 gezeigten Verfahren ist auf weiterhin zu betreibende und zu deaktivierende Zylinder 6 anwendbar. Es ist ersichtlich, dass eine Abmagerung des Luft-Kraftstoff-Gemischs, das aus dem Modell 94 hervorgeht, nicht für die weiterhin zu betreibenden Zylindern 6 relevant ist bzw. nicht erfolgt.

In einer Alternative zu den in Fig. 2 und 3 gezeigten Verfahren können die jeweiligen Zündwinkel(ver)stellungen auch als ein Offset auf den aktuell berechneten Zündwinkel in Kennfeldern hinterlegt werden. Die als Offset eingestellten Zündwinkel(ver)stellungen können einen Ausgleich des aus der Gasfederkompression resultierenden Verlustmoments 64 und/oder für eine Verringerung der Gasfederwirkung bewirken.

### Bezugszeichenliste

- 1: Verbrennungsmotor
- 2: Kurbelwelle
- 3: Kurbelgehäuse
- 4: Kurbelzapfen
- 5: Zylinderkopf
- 6: Zylinder
- 8: Kolben
- 10: Pleuelstange
- 12: Brennraum
- 14: Einlassventil
- 14': Einlassventilverlauf
- 16: Auslassventil
- 16': Auslassventilverlauf
- 18: Einspritzvorrichtung
- 18': Einspritzvorgang
- 20: Nockenwelle
- 21: Grundwelle
- 22: Nockenwellenträger
- 24: erste Nocke
- 26: zweite Nocke
- 30: Riemenrad
- 32: Übertragungselement
- 34: Steuervorrichtung
- 36: Umschaltvorrichtung
- 40: Zündung
- 42: theoretischer Momentenbeitrag
- 44: tatsächlicher Momentenbeitrag
- 46: negativer Momentenbeitrag
- 47: Auslassventilverlauf
- 48: Momentenbeitrag
- 49: Einlassventilverlauf
- 50: Momentenbeitrag
- 52, 56: Umschaltzeitpunkt Auslassnockenwelle
- 54, 58: Umschaltzeitpunkt Einlassnockenwelle
- 60: Soll-Moment der Kurbelwelle
- 62: Verlustmomente
- 64: Verlustmoment durch Gasfederwirkung
- 65: Umschaltblock
- 66: Zeitpunkt Gasfederkompression
- 68: Zeitpunkt/Zeitraum ohne Gasfederkompression
- 70: Motorlast
- 72: Motordrehzahl
- 73: empirisches Modell Verlustmoment durch Gasfederwirkung
- 76: Gasfedermodell
- 80: inneres Soll-Moment des Verbrennungsmotors
- 82: Luftmenge
- 83: empirisches Modell für Abmagerungsgrenze eines Luft-Kraftstoff-Gemisches
- 84: abgemagertes Luft-Kraftstoff-Gemisch
- 86: Zeitpunkt Kraftstoffeinspritzung
- 88: Luft-Kraftstoff-Gemisch aus dem Normalbetrieb
- 96: Momentenmodell
- 94: Luft-Kraftstoff-Gemisch-Modell
- 100: Zündwinkel

## Patentansprüche

1. Verfahren zur Steuerung eines Verbrennungsmotors mit mehreren Zylindern, wobei der Verbrennungsmotor
- einen ersten Betriebszustand, in dem alle Zylinder aktiv sind; und
- einen zweiten Betriebszustand, in einer der mehreren Zylinder aktiv und einer der mehreren Zylinder deaktiviert ist;
aufweist, wobei das Verfahren umfasst:
- Umschalten des Verbrennungsmotors von dem ersten in den zweiten Betriebszustand, wobei, in dem zu deaktivierenden Zylinder, ein Auslassventil nach einem Verbrennungstakt und ein Einlassventil vor einem dem Verbrennungstakt folgenden Ansaugtakt im geschlossenen Zustand deaktiviert werden, so dass ein aus dem Verbrennungstakt entstehendes Abgas in dem zu deaktivierenden Zylinder eingeschlossen wird; und
- Ändern eines Zündwinkels des zu deaktivierenden Zylinders zu einem früheren Zündzeitpunkt hin zur Verringerung einer Temperatur eines während des Verbrennungstakts entstehenden Abgases.

2. Verfahren nach Anspruch 1, das ferner umfasst:
- Abmagern eines Luft-Kraftstoff-Gemischs in dem zu deaktivierenden Zylinder.

3. Verfahren nach Anspruch 1 oder 2, das ferner umfasst:
- Erhöhen eines von dem aktiven Zylinder erzeugbaren Momentenbeitrag in Abhängigkeit einer Gasfederwirkung, die durch das in dem deaktivierten Zylinder eingeschlossenen Abgas bewirkt wird.

4. Verfahren nach Anspruch 3, wobei das Erhöhen des erzeugbaren Momentenbeitrags der aktiven Zylinder durch Ändern eines Zündwinkels der aktiven Zylinder zu einem früheren Zündzeitpunkt hin erfolgt.

5. Verfahren nach einem der Ansprüche 1 bis 4, wobei der frühere Zündzeitpunkt für das Ändern des Zündwinkels des zu deaktivierenden Zylinders und/oder der frühere Zündzeitpunkt für das Ändern des Zündwinkels der aktiven Zylinder entsprechend einem Soll-Moment des Verbrennungsmotors einstellbar ist.

6. Verfahren nach Anspruch 5, wobei die Bestimmung des Soll-Moments des Verbrennungsmotors folgendes umfasst:
- Erfassen eines Soll-Moments einer Abtriebswelle des Verbrennungsmotors;
- Bestimmen eines aus einer Gasfederwirkung resultierenden Verlustmomentes, wobei die Gasfederwirkung durch das in dem deaktivierten Zylinder befindliche Abgas bewirkt wird; und
- Bestimmen eines Soll-Moments des Verbrennungsmotors in Abhängigkeit des Soll-Moments der Abtriebswelle und des aus der Gasfederwirkung resultierenden Verlustmoments.

7. Verfahren nach Anspruch 6, wobei das Bestimmen des aus der Gasfederwirkung resultierenden Verlustmomentes beim Komprimieren des Abgases in dem deaktivierten Zylinder erfolgt.

8. Verfahren nach Anspruch 6 oder 7, wobei das aus der Gasfederwirkung resultierende Verlustmoment mittels eines empirischen Modells bestimmbar ist.

9. Verfahren nach einem der Ansprüche 2 bis 8, wobei eine untere Abmagerungsgrenze für das Luft-Kraftstoff-Gemisch in dem zu deaktivierenden Zylinder mittels eines empirisches Modells bestimmbar ist.

10. Verfahren nach einem der Ansprüche 6 bis 9, wobei das Erhöhen des von dem aktiven Zylinder erzeugbaren Momentenbeitrags zu einem Zeitpunkt erfolgt, bei dem die Gasfeder ein Verlustmoment erzeugt.

11. Verfahren nach einem der Ansprüche 1 bis 5, wobei die Änderung des Zündwinkels für den aktiven und/oder den zu deaktivierenden Zylinder/n als ein Offset auf einen aktuellen Zündwinkel des/der aktiven und/oder zu deaktivierenden Zylinder/s in Kennfeldern abgelegt ist.

12. Verfahren nach einem der vorherigen Ansprüche, das ferner umfasst:
- Erhöhen, vor dem Umschalten des Verbrennungsmotors von dem ersten in den zweiten Betriebszustand, von Luftfüllungen für alle Zylinder des Verbrennungsmotors; und
- Ändern, vor dem Umschalten des Verbrennungsmotors von dem ersten in den zweiten Betriebszustand, von Zündwinkeln für alle Zylinder des Verbrennungsmotors zu einem späteren Zündzeitpunkt hin.

13. Motorsteuerung für einen Verbrennungsmotor, die zum Ausführen des Verfahrens nach einem der Ansprüche 1 bis 12 eingerichtet und ausgebildet ist.

14. Verbrennungsmotor mit einer Motorsteuerung nach Anspruch 13, der gemäß dem Verfahren nach einem der Ansprüche 1 bis 12 steuerbar ist.

15. Fahrzeug mit einem Verbrennungsmotor nach Anspruch 14.

## Claims

1. Method for controlling an internal combustion engine with a plurality of cylinders, wherein the internal combustion engine comprises
- a first operating state in which all cylinders are active; and
- a second operating state, in which one of the plurality of cylinders is active and one of the plurality of cylinders is deactivated;
wherein the method comprises:
- switching the internal combustion engine from the first to the second operating state, wherein, in the cylinder to be deactivated, an outlet valve is deactivated after an ignition stroke and an inlet valve is deactivated before an intake stroke following the ignition stroke in the closed state, so that an exhaust gas arising from the ignition stroke is enclosed in the cylinder to be deactivated; and
- changing an ignition angle of the cylinder to be deactivated toward an earlier ignition time in order to reduce a temperature of an exhaust gas arising during the ignition stroke.

2. Method according to Claim 1, further comprising:
- leaning an air-fuel mixture in the cylinder to be deactivated.

3. Method according to Claim 1 or 2, further comprising:
- increasing a torque contribution which can be generated by the active cylinder as a function of a gas-spring effect caused by the exhaust gas enclosed in the deactivated cylinder.

4. Method according to Claim 3, wherein the increasing of the generatable torque contribution of the active cylinders is effected by changing an ignition angle of the active cylinders toward an earlier ignition time.

5. Method according to any one of Claims 1 to 4, wherein the earlier ignition time for changing the ignition angle of the cylinder to be deactivated and/or the earlier ignition time for changing the ignition angle of the active cylinders is adjustable in accordance with a setpoint torque of the internal combustion engine.

6. Method according to Claim 5, wherein the determination of the setpoint torque of the internal combustion engine comprises the following:
- capturing a setpoint torque of an output shaft of the internal combustion engine;
- determining a loss torque resulting from a gas-spring effect, the gas-spring effect being caused by the exhaust gas located in the deactivated cylinder; and
- determining a setpoint torque of the internal combustion engine as a function of the setpoint torque of the output shaft and of the loss torque resulting from the gas-spring effect.

7. Method according to Claim 6, wherein the determination of the loss torque resulting from the gas-spring effect occurs during the compression of the exhaust gas in the deactivated cylinder.

8. Method according to Claim 6 or 7, wherein the loss torque resulting from the gas-spring effect can be determined by means of an empirical model.

9. Method according to any one of Claims 2 to 8, wherein a lower leaning limit for the air-fuel mixture in the cylinder to be deactivated can be determined by means of an empirical model.

10. Method according to any one of Claims 6 to 9, wherein the increase in the torque contribution that can be generated by the active cylinder takes place at a time at which the gas spring generates a loss torque.

11. Method according to any one of Claims 1 to 5, wherein the change in the ignition angle for the active cylinder(s) and/or the cylinder(s) to be deactivated is stored in characteristic maps as an offset to a current ignition angle of the active cylinder(s) and/or of the cylinder(s) to be deactivated.

12. Method according to any one of the preceding claims, further comprising:
- increasing, prior to the switching of the internal combustion engine from the first to the second operating state, air charges for all cylinders of the internal combustion engine; and
- changing, prior to the switching of the internal combustion engine from the first to the second operating state, ignition angles for all cylinders of the internal combustion engine toward a later ignition time.

13. Engine controller for an internal combustion engine configured and designed to carry out the method according to any one of Claims 1 to 12.

14. Internal combustion engine with an engine controller according to Claim 13, which is controllable in accordance with the method according to any one of Claims 1 to 12.

15. Vehicle having an internal combustion engine according to Claim 14.

## Revendications

1. Procédé de commande d'un moteur à combustion comprenant plusieurs cylindres, dans lequel le moteur à combustion présente
- un premier état de fonctionnement, dans lequel tous les cylindres sont actifs ; et
- un second état de fonctionnement, dans lequel un cylindre des plusieurs cylindres est actif et un cylindre des plusieurs cylindres est désactivé ;
dans lequel le procédé comprend :
- la commutation du moteur à combustion du premier au second état de fonctionnement, dans lequel, dans le cylindre à désactiver, une soupape d'échappement est désactivée après un cycle de combustion et une soupape d'admission est désactivée avant un cycle d'admission suivant le cycle de combustion dans l'état fermé, de sorte qu'un gaz d'échappement résultant du cycle de combustion soit piégé dans le cylindre à désactiver ; et
- la modification d'un angle d'allumage du cylindre à désactiver en un instant d'allumage antérieur pour réduire une température du gaz d'échappement résultant pendant le cycle de combustion.

2. Procédé selon la revendication 1, qui comprend en outre :
- l'appauvrissement d'un mélange air-carburant dans le cylindre à désactiver.

3. Procédé selon la revendication 1 ou 2, qui comprend en outre :
- l'augmentation d'une contribution au couple pouvant être produite par le cylindre actif en fonction d'un impact de ressort à gaz, qui est actionné par le gaz d'échappement piégé dans le cylindre désactivé.

4. Procédé selon la revendication 3, dans lequel l'augmentation de la contribution au couple pouvant être produite du cylindre actif est réalisée par la modification d'un angle d'allumage du cylindre actif en un instant d'allumage antérieur.

5. Procédé selon l'une quelconque des revendications 1 à 4, dans lequel l'instant d'allumage antérieur pour la modification de l'angle d'allumage du cylindre à désactiver et/ou l'instant d'allumage antérieur pour la modification de l'angle d'allumage du cylindre actif sont réglables de manière correspondante à un couple de consigne du moteur à combustion.

6. Procédé selon la revendication 5, dans lequel la détermination du couple de consigne du moteur à combustion comprend les étapes suivantes :
- détection d'un couple de consigne d'un arbre de sortie du moteur à combustion ;
- détermination d'un couple de perte résultant d'un impact de ressort à gaz, dans lequel l'impact de ressort à gaz est actionné par le gaz d'échappement se trouvant dans le cylindre désactivé ; et
- détermination d'un couple de consigne du moteur à combustion en fonction du couple de consigne de l'arbre de sortie et du couple de perte résultant de l'impact de ressort à gaz.

7. Procédé selon la revendication 6, dans lequel la détermination du couple de perte résultant de l'impact de ressort à gaz est effectué par compression du gaz d'échappement dans le cylindre désactivé.

8. Procédé selon la revendication 6 ou 7, dans lequel le couple de perte résultat de l'impact de ressort à gaz peut être déterminé au moyen d'un modèle empirique.

9. Procédé selon l'une quelconque des revendications 2 à 8, dans lequel une limite d'appauvrissement inférieure pour le mélange air-carburant dans le cylindre à désactiver peut être déterminée au moyen d'un modèle empirique.

10. Procédé selon l'une quelconque des revendications 6 à 9, dans lequel l'augmentation de la contribution au couple pouvant être produite par le cylindre actif est effectuée à un instant auquel le ressort à gaz produit un couple de perte.

11. Procédé selon l'une quelconque des revendications 1 à 5, dans lequel la modification de l'angle d'allumage pour le cylindre actif et/ou le cylindre à désactiver est présente sous la forme d'un décalage de l'angle d'allumage actuel du cylindre actif et/ou du cylindre à désactiver dans des diagrammes caractéristiques.

12. Procédé selon l'une quelconque des revendications précédentes, qui comprend en outre :
- l'augmentation, avant la commutation du moteur à combustion du premier au second état de fonctionnement, des charges d'air pour tous les cylindres du moteur à combustion ; et
- la modification, avant la commutation du moteur à combustion du premier au second état de fonctionnement, des angles d'allumage pour tous les cylindres du moteur à combustion à un instant d'allumage ultérieur.

13. Commande de moteur pour un moteur à combustion, qui est conçu et formé pour la réalisation du procédé selon l'une quelconque des revendications 1 à 12.

14. Moteur à combustion comprenant une commande de moteur selon la revendication 13, qui peut être commandé conformément au procédé selon l'une quelconque des revendications 1 à 12.

15. Véhicule comprenant un moteur à combustion selon la revendication 14.
